# EUROPÄISCHE PATENTSCHRIFT

(11) **EP 0 622 289 B1**
(45) Veröffentlichungstag und Bekanntmachung des Hinweises auf die Patenterteilung: **21.08.1996**
(21) Anmeldenummer: 94105735.8
(22) Anmeldetag: 14.04.1994
(51) Int. Cl.: B62D 23/00

(54) **Karosserie für Kraftfahrzeuge**
Car body for motor vehicles
Carrosserie pour véhicules à moteur

(30) Priorität: 26.04.1993 DE 4313562
(43) Veröffentlichungstag der Anmeldung: 02.11.1994
(73) Patentinhaber: ADAM OPEL AG, D-65423 Rüsselsheim (DE); General Motors Espana, S.A., Figueruelas (Zaragoza) (ES)
(72) Erfinder: Brandel, Klaus, D-55578 Wallertheim (DE); Pache, Hans-Jürgen, D-65468 Trebur (DE)
(74) Vertreter: Bergerin, Ralf, Dipl.-Ing.

(56) Entgegenhaltungen:
- EP-A- 0 146 716
- EP-A- 0 229 591
- DE-A- 3 035 333
- DE-A- 4 133 814
- US-A- 4 826 238

## Beschreibung

Die Erfindung betrifft eine Karosserie für Kraftfahrzeuge, bei der stranggepreßte Leichtmetallprofile als tragende und karosseriewandbildende Elemente dienen.

Eine solche Karosserie ist bereits vorgeschlagen mit der deutschen Patentanmeldung P 41 33 814.6. Bei dieser Karosserie wird ein rohrförmiges, den gesamten Karosseriequerschnitt umhüllendes Gebilde durch aneinandergefügte Strangpreßprofile gebildet, in welches eine Front- und eine Heckkontur sowie seitliche Öffnungen für Fenster und Türen geschnitten werden. Front- und Heckkontur werden von an die Konturen angepaßten Modulen verschlossen. Die Ausschnitte der seitlichen Öffnungen werden als Basisteile für die Türen und dgl. verwendet.

Mit einer solchen Bauweise kann zwar auf äußerst rationelle Weise eine sehr stabile und leichte Karosserie gefertigt werden, jedoch sind dem Styling einer solchen Karosserie Grenzen gesetzt, da in der Seitenansicht über den Verlauf der extrudierten Leichtmetallprofile im Bereich des mittleren Karosseriekörpers nur gerade verlaufende Linien realisierbar sind. Da des weiteren bei einer solchen Karosserie die karosseriewandbildenden Elemente über die gesamte Länge des Karosseriekörpers mit einem gleichbleibenden Querschnitt verwendet werden, ist es kompliziert, einen über die gesamte Länge brauchbaren und lediglich durch Ausschnitte anpaßbaren Querschnitt zu erreichen.

Aufgabe der vorliegenden Erfindung ist es, eine Karosserie für Kraftfahrzeuge zu schaffen, bei welcher ebenfalls stranggepreßte Leichtmetallprofile als tragende und karosseriewandbildende Elemente dienen, bei der aber auch Teile der seitlichen Silhouette des mittleren Karosseriekörpers geschwungene Linien aufweisen können und bei welcher die seitenbildenden Strangpreßprofile besser auf ihre unterschiedlichen funktionellen Anforderungen in verschiedenen Querschnittsbereichen anpaßbar sind.

Erfindungsgemäß wird diese Aufgabe dadurch gelöst, daß ein Karosseriekörper seitlich im Bereich der Bodenschweller bis zur Gürtellinie von in Fahrzeuglängsrichtung verlaufenden Strangpreßprofilen gebildet ist, eine Bodenanlage im wesentlichen von quer zur Fahrtrichtung verlaufenden Strangpreßprofilen gebildet ist, welche mit den seitenbildenden Strangpreßprofilen im Bereich der Bodenschweller verbunden sind, oberhalb der Gürtellinie der Karosserie auf die seitenbildenden Strangpreßprofile ein durch Säulen getragener Dachrahmen aus gebogenen Profilen aufgesetzt ist und in an sich bekannter Weise die Türöffnungen aus den seitenbildenden Strangpreßprofilen geschnitten sind, an einer vorderen und einer hinteren Kante eine Kontur zum Einpassen eines Front- und Heckmoduls gebildet ist und der Dachbereich über den Dachrahmen durch verformte Teile verkleidet ist, wobei die oberhalb des Bodenschwellers angeordneten seitenbildenden Strangpreßprofile in ihrer Länge unterteilt und mit spezifischen für ihren Längenbereich angepaßten Querschnitten versehen sind.

Die Bodenanlage kann dabei mit Ausschnitten versehen sein, die von bodenbildenden Teilen des Front- oder Heckmoduls ausgefüllt sind, wobei die bodenbildenden Teile des Front- bzw. Heckmoduls mit der Bodenanlage verbunden sind.

Die Verbindung der Strangpreßprofile miteinander in ihrer Längsrichtung erfolgt in an sich bekannter Weise durch angeformte Fügekanten, die ineinandergreifen und eine formschlüssige Verbindung bilden.

Die Verbindung von senkrecht bzw. in stumpfen Winkeln zueinander verlaufenden Strangpreßprofilen erfolgt in an sich bekannter Weise durch am endseitigen Beschnitt des einen Strangpreßprofils gebildete Zapfen und durch entsprechende Öffnungen und Einfräsungen im Verlauf des anderen Strangpreßprofils unter Benutzung von Spannelementen, Schweiß- und/oder Klebverfahren.

Endseitige Beschnittkanten sowie Ausschnittkanten an den Türöffnungen können in an sich bekannter Weise durch gesonderte Abdeckteile aus Leichtmetall oder Kunststoff abgedeckt sein, wobei die Abdeckteile durch Schrauben und/oder durch Schweißen und/oder durch Kleben befestigt sind.

Die Ausschnitte für die Türöffnungen sowie für die Radhäuser haben vorzugsweise jeweils an Fahrzeuginnenseite und Fahrzeugaußenseite einen unterschiedlichen Verlauf, wobei sich der äußere Verlauf nach Gesichtspunkten des Fahrzeugdesigns und der innere Verlauf nach Gesichtspunkten optimaler Anpassung der Nachbarteile orientiert.

Ausführungsbeispiele der Erfindung sind nachstehend anhand von Zeichnungen näher beschrieben. Es zeigen:

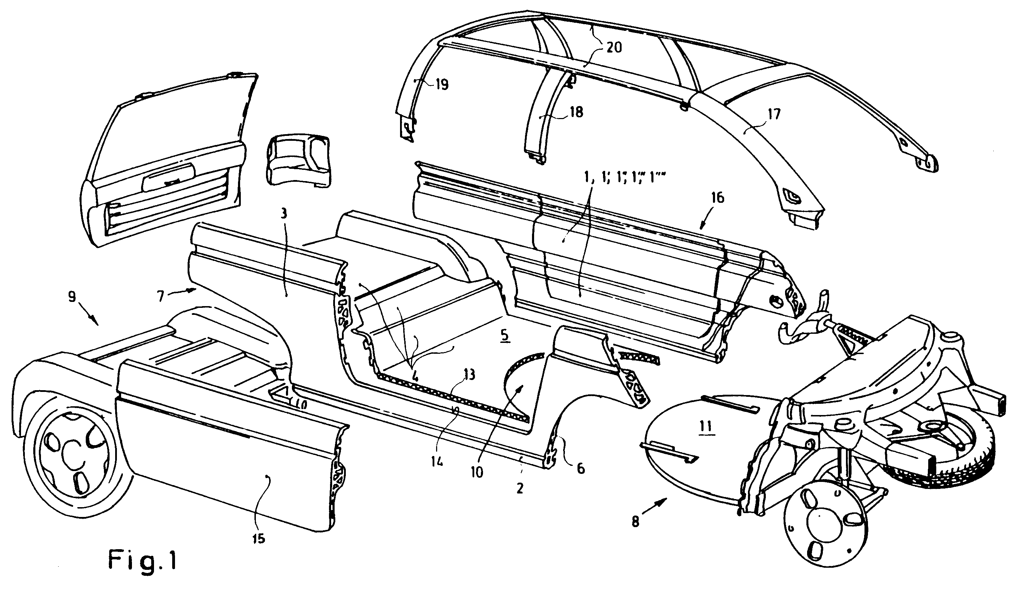

- Fig. 1: die wesentlichen tragenden Elemente einer erfindungsgemäßen Karosserie in einer Explosivdarstellung unter Einbeziehung eines Front- sowie eines Heckmoduls eines Kraftfahrzeuges;

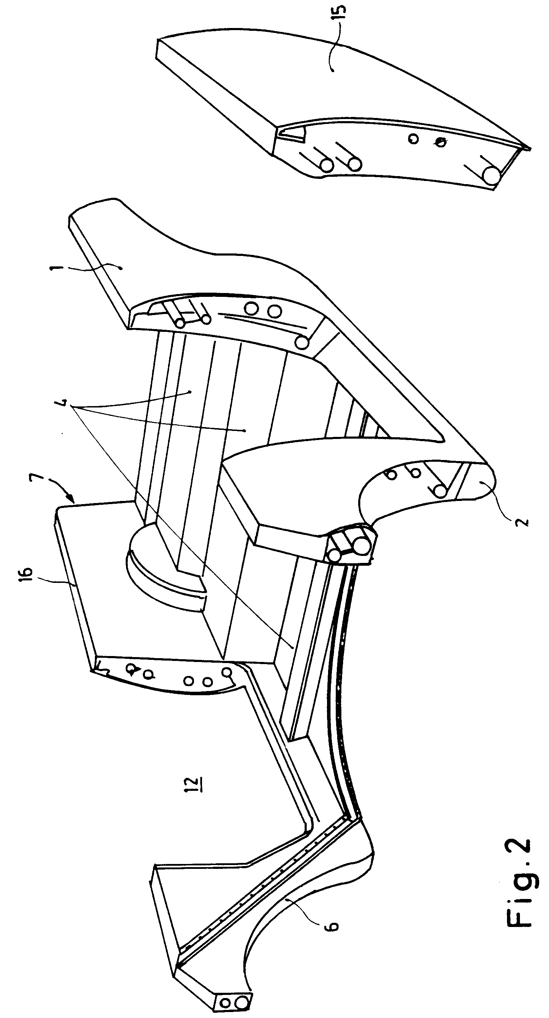

- Fig. 2: eine Karosseriesektion, bestehend aus den in Fahrzeuglängsrichtung verlaufenden seitenbildenden Strangpreßprofilen sowie den quer zur Fahrzeuglängsrichtung verlaufenden eine Bodenanlage bildenden Strangpreßprofilen in perspektivischer Ansicht;
- Fig. 3: eine Bodenanlage mit angesetzten Längsschwellern in perspektivischer Darstellung;
- Fig. 4: den Abschnitt eines Längsschwellers;
- Fig. 5: einen Längsschweller sowie ein seitenbildendes Strangpreßprofil im Schnitt beim Zusammenfügen;
- Fig. 6: eine Karosseriesektion mit einem Hinterradausschnitt und einer Verkleidung des Radhauses;
- Fig. 7: das Profil eines Längsschwellers;
- Fig. 8: das Profil eines einteiligen seitenbildenden Strangpreßprofils;
- Fig. 9: das Profil eines zweiteiligen seitenbildenden Strangpreßprofils;
- Fig. 10: das Profil eines zweiteiligen seitenbildenden Strangpreßprofils in einer anderen Aufteilung;
- Fig. 11: die Seitenwand einer erfindungsgemäßen Karosserie;
- Fig. 12: die fahrzeugäußere Ansicht seitenbildender Strangpreßprofile mit der außen sichtbaren Trennkante eines Türausschnittes;
- Fig. 13: die seitenbildenden Strangpreßprofile nach Figur 12 vom Fahrzeuginneren gesehen mit einem gegenüber außen abweichenden Trennkantenverlauf;
- Fig. 14: eine Verbindungsstelle zwischen zwei Strangpreßprofilen.

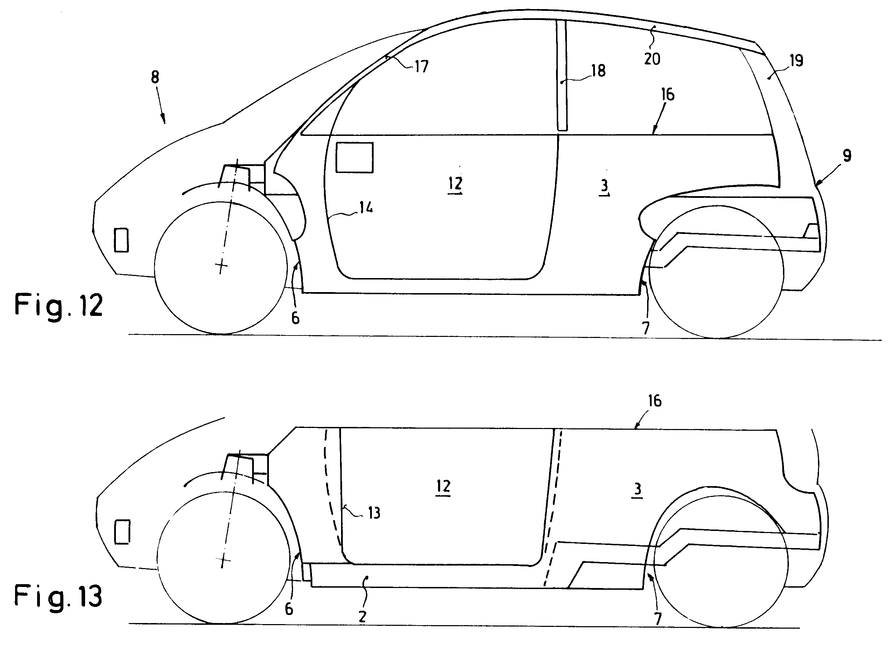

Ein Karosseriekörper wird beidseitig von seitenbildenden Strangpreßprofilen 1 gebildet, welche den Bereich der in Fahrzeuglängsrichtung verlaufenden Bodenschweller 2 sowie die Seitenwände 3 umfassen. Im Bereich der Bodenschweller 2 sind die seitenbildenden Strangpreßprofile 1 mit quer zur Fahrtrichtung des Fahrzeuges verlaufenden Strangpreßprofilen 4 verbunden, die so eine Bodenanlage 5 zwischen den seitenbildenden Strangpreßprofilen 1 bilden. Damit erzeugen die seitenbildenden Strangpreßprofile 1 zusammen mit den die Bodenanlage 5 bildenden Strangpreßprofilen 4 ein im Querschnitt U-förmiges Gebilde, welches sowohl an seiner vorderen Kante 6 als auch an seiner hinteren Kante 7 so beschnitten ist, daß die Konturen eines Frontmoduls 8 bzw. eines Heckmoduls 9 paßgerecht angefügt werden können. Die Bodenanlage 5 ist von der Seite des Frontmoduls 8 her mit einem Ausschnitt 10 versehen, welcher durch eine bodenbildenden Teil 11 des Frontmoduls 8 im zusammengebauten Zustand abgedeckt wird. In die Seitenwände 3 sind Türöffnungen 12 eingebracht. Wie Figur 12 und 13 zeigen, kann die innere Beschnittkante 13 der Türöffnung 12 einen anderen Verlauf haben, als die äußere Beschnittkante 14, so daß eine in die Türöffnung 12 eingesetzte Tür 15 mit vorteilhaft angebrachten Türdichtungen versehen werden kann. Als Tür 15 bietet sich der ausgeschnittene Teil aus der Seitenwand 3 an. Auf die oberen Kanten der Seitenwände 3 im Bereich der Gürtellinie 16 der Karosserie sind die Säulen 17, 18 und 19 aufgesetzt, welche einen Dachrahmen 20 tragen. Die Säulen 17, 18, 19 können aus einem gebogenen extrudierten Profil oder aus einem Leichtmetall-Gußteil oder einem Metall-Umformteil bestehen. Der Dachrahmen 20 setzt sich zusammen aus gebogenen extrudierten Profilen, die mit den Säulen 17, 18, 19 verbunden sind.

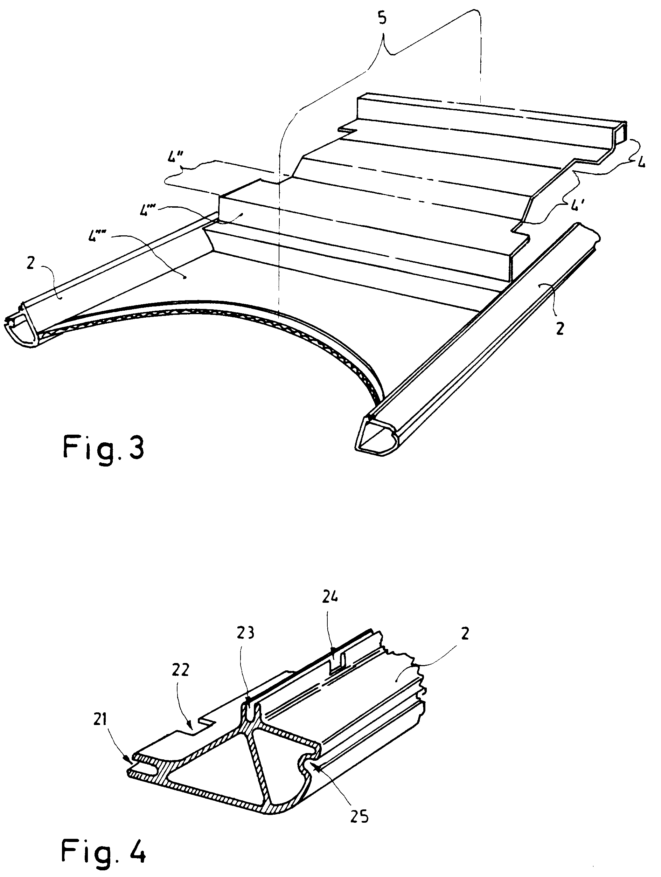

Wie Figur 3 zeigt, ist die Bodenanlage 5 aus mehreren Strangpreßprofilen 4, 4', 4'', 4''', 4'''' unterschiedlichen Querschnittes zusammengesetzt. Damit gelingt es auf einfache Weise, auch komplizierte Verläufe der Bodenanlage 5 in Fahrzeuglängsrichtung auszuführen. Figur 4 zeigt einen Abschnitt eines Bodenschwellers 2 mit einer Nut 21 zur Aufnahme von Strangpreßprofilen 4, welche die Bodenanlage 5 bilden und mit Einfräsungen 22 zur Fixierung und Längenzuordnung dieser Strangpreßprofile 4 versehen sind. Eine weitere Nut 23 nimmt die seitenbildenden Strangpreßprofile 1 auf, welche durch Einfräsungen 24 in der Länge fixiert sind.

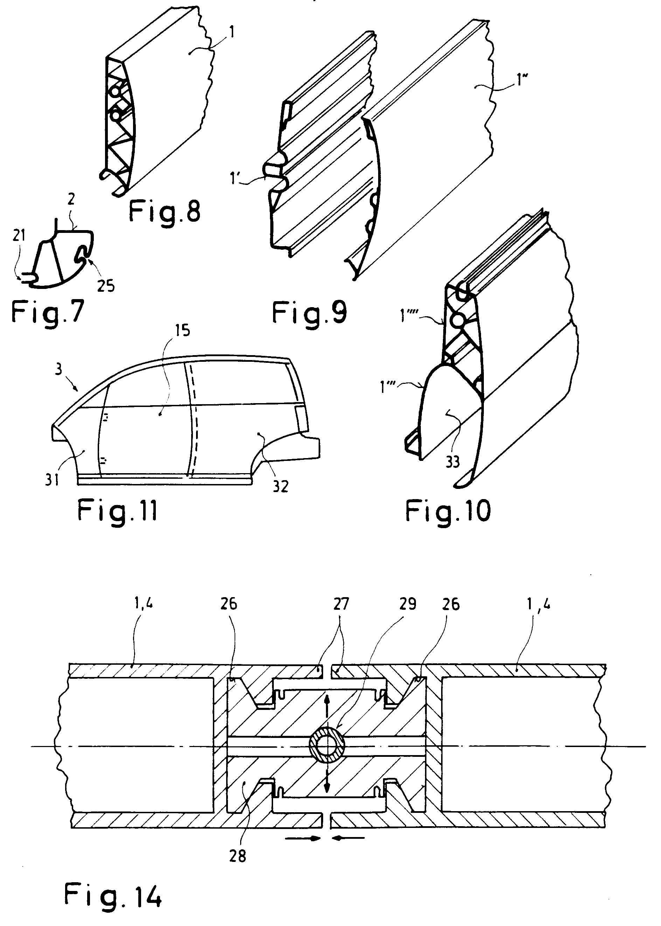

Ebenso wie die Bodenanlage 5 aus mehreren Strangpreßprofilen 4 zusammengesetzt ist, können auch die Seitenwände 3 aus mehreren Strangpreßprofilen 1 zusammengesetzt sein. Dabei besteht eine Teilung sowohl im Querschnitt als auch im Längsverlauf. Figur 8 zeigt ein einteiliges seitenbildendes Strangpreßprofil 1. Figur 9 zeigt Zwei seitenbildende Strangpreßprofile 1' und 1'', die im Querschnitt in der Ebene der Seitenwand 3 getrennt sind. Figur 10 zeigt zwei seitenbildende Strangpreßprofile 1''' und 1'''', welche senkrecht zur Ebene der Seitenwand 3 in ihrem Querschnitt getrennt sind. Die Trennung der seitenbildenden Strangpreßprofile 1 in ihrem Längsverlauf wird beispielhaft an einer Seitenwand 3 verdeutlicht. Dabei ist die Seitenwand 3, wie Figur 11 zeigt, über ihre Länge zwar aus im äußeren Querschnitt gleichen Strangpreßprofilen 1 gebildet, die jedoch über bestimmte Längenabschnitte im Inneren unterschiedlichen Querschnitt aufweisen. Diese unterschiedlichen Querschnitte sind auf die spezifischen Anforderungen angepaßt. So kann z. B. der Seitenwandbereich 31 vor der Tür 15 aus einem einteiligen Strangpreßprofil 1 (Figur 8) bestehen. In der Fortsetzung der Seitenwand 3 durch die Tür 15 können Strangpreßprofile 1' und 1'' (Figur 9) Verwendung finden, wobei das Strangpreßprofil 1' als Türinnenteil ausgebildet ist und als Träger der im Türinnenraum anzuordnenden Aggregate besonders gestaltet ist, während das Strangpreßprofil 1'' als Türaußenteil mit dem Türinnenteil verschraubt die Türfläche nach außen abschließt. Der Seitenwandbereich 32 wird gebildet von Strangpreßprofilen 1''' und 1'''' (Figur 10), bei denen bereits ein Raum 33 zur Bildung eines hinteren Radhauses vorgesehen ist.

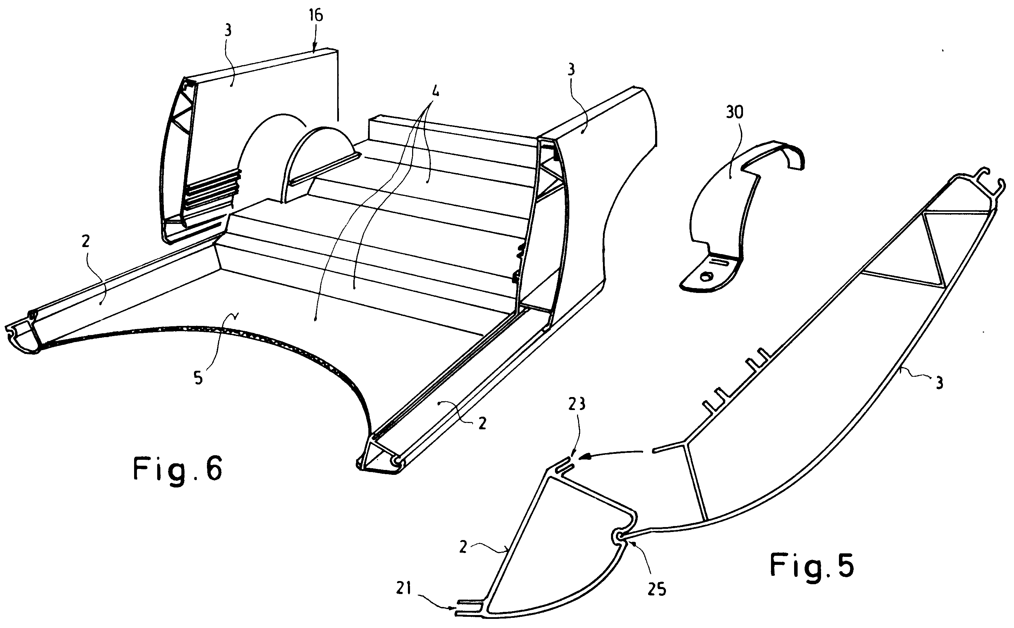

Figur 5 zeigt eine Ausführungsvariante, wie eine Seitenwand 3 mit einem Bodenschweller 2 formschlüssig verbunden werden kann, wobei die Verbindungsstellen an der Nut 23 sowie einer Formnut 25 vorteilhaft als Klebverbindungen ausgeführt werden.

Figur 6 zeigt eine Bodenanlage 5 und die sie seitlich begrenzenden Bodenschweller 2 mit aufgesetzten Seitenwänden 3, in welche die Radausschnitte für die hinteren Räder eingebracht sind. Ein Abdeckteil 30, das wahlweise als metallisches Formteil oder als Kunststoffteil ausgeführt sein kann, bildet die Innenseite des Radhauses. Das Abdeckteil 30 kann durch Kleben, Schweißen oder Schrauben mit den benachbarten Teilen verbunden sein.

Figur 14 zeigt eine Verbindungsstelle zweier längs aneinanderliegender Strangpreßprofile 1 bzw. 4. Durch die beim Strangpressen eingeformten Schwalbenschwanzprofile 26 entlang der Ränder 27 können an sich bekannte Verbindungselemente 28 eingesetzt werden, welche beim Aufspreizen durch eine Spannhülse 29 die beiden Strangpreßprofile 1 bzw. 4 gegeneinander ziehen.

Mit einer Karosserie nach der vorliegenden Erfindung können die Vorteile durch die Verwendung von Strangpreßprofilen, nämlich die weitestgehend festigkeitsgerechte Vorverlegung von Bauteilen, wie z. B. die Integration von Türseitenversteifungen, und die Vorbereitung einer effektiven Montage, wie z. B. das Anformen von Paßnuten, verbunden werden mit einer relativ freien Formgebung der Karosserie. Indem die Bodenanlage 5 aus Strangpreßprofilen 4 gebildet ist, die quer zu den seitenbildenden Strangpreßprofilen 1 angeordnet sind, kann die Bodenanlage 5 den technischen Anforderungen besser angeglichen werden als bei einer Bauweise, bei welcher auch eine Bodenanlage aus längsverlaufenden Strangpreßprofilen gebildet ist. Die längenbezogene Aufteilung der seitenbildenden Strangpreßprofile 1 ermöglicht sowohl eine festigkeitsgerechte Anpassung der Strangpreßprofile 1 als auch eine Anpassung der Gestaltung auf die Verhältnisse, wie sie sich durch die unterschiedlichen technischen Anforderungen, z. B. am Vorderteil einer Seitenwand, im Türbereich oder am Hinterteil einer Seitenwand ergeben. Da damit eine Aufteilung der seitenbildenden Strangpreßprofile 1 auch in ihrer Längsrichtung partiell möglich ist, können z. B. die Türen aus Innen- und Außenschale getrennt gefertigt werden. Auch können aus Fertigungsgründen größere Profilquerschnitte in mehrere kleine Querschnitte partiell aufgeteilt werden. Durch Aufsetzen der Säulen 17, 18 und 19 in Verbindung mit einem Dachrahmen 20 auf die seitenbildenden Strangpreßprofile 1 in Höhe der Gürtellinie 16 des Fahrzeuges kann die Linienführung der Karosserie freier erfolgen, indem auch geschwungene Linien über die gesamte Seitenansicht der Karosserie realisiert werden können.

## Patentansprüche

1. Karosserie für Kraftfahrzeuge, bei der stranggepreßte Leichmetallprofile als tragende und karosseriewandbildende Elemente dienen, **dadurch gekennzeichnet**, daß ein Karosseriekörper seitlich im Bereich der Bodenschweller (2) bis zur Gürtellinie (16) von in Fahrzeuglängsrichtung verlaufenden Strangpreßprofilen (1) gebildet ist, eine Bodenanlage (5) im wesentlichen von quer zur Fahrtrichtung verlaufenden Strangpreßprofilen (4) gebildet ist, welche mit den seitenbildenden Strangpreßprofilen (1) im Bereich der Bodenschweller (2) verbunden sind, oberhalb der Gürtellinie (16) der Karosserie auf die seitenbildenden Strangpreßprofile (1) ein durch Säulen (17, 18, 19) getragener Dachrahmen (20) aus gebogenen Profilen aufgesetzt ist und in an sich bekannter Weise die Türöffnungen (12) aus den seitenbildenden Strangpreßprofilen (1) geschnitten sind, an einer vorderen Kante (6) und einer hinteren Kante (7) eine Kontur zum Einpassen eines Frontmoduls (8) und eines Heckmoduls (9) gebildet ist und der Dachbereich über den Dachrahmen (20) durch verformte Teile verkleidet ist, wobei die oberhalb des Bodenschwellers (2) angeordneten seitenbildenden Strangpreßprofile (1) in ihrer Länge unterteilt und mit spezifischen für ihren Längenbereich angepaßten Querschnitten versehen sind.

2. Karosserie nach Anspruch 1, **dadurch gekennzeichnet**, daß die Bodenanlage (5) mit Ausschnitten (10) versehen ist, die von bodenbildenden Teilen (11) des Frontmoduls (8) und/oder des Heckmoduls (9) ausgefüllt sind, wobei die bodenbildenden Teile (11) mit der Bodenanlage (5) verbunden sind.

3. Karosserie nach Anspruch 1 und 2, **dadurch gekennzeichnet**, daß die Verbindung der Strangpreßprofile (1; 4) miteinander in ihrer Längsrichtung in an sich bekannter Weise durch angeformte Fügekanten (Nut 23; Formnut 25; Schwalbenschwanzprofil 26), die ineinandergreifen und eine formschlüssige Verbindung darstellen, gebildet ist.

4. Karosserie nach Anspruch 1 bis 3, **dadurch gekennzeichnet**, daß die Verbindung von senkrecht bzw. in stumpfen Winkeln zueinander verlaufenden Strangpreßprofile (1; 4) in an sich bekannter Weise durch am endseitigen Beschnitt des einen Strangpreßprofils (4) gebildete Zapfen und durch entsprechende Öffnungen und Einfräsungen (22) im Verlauf des anderen Strangpreßprofils (1) unter Benutzung von Spannelementen und/oder Schweißverfahren und/oder Klebeverfahren gebildet ist.

5. Karosserie nach Anspruch 1 bis 4, **dadurch gekennzeichnet**, daß endseitige Beschnittkanten sowie Ausschnittkanten an Türöffnungen (12), Radhäusern oder dgl. in an sich bekannter Weise durch gesonderte Abdeckteile (30) aus Metall oder Kunststoff abgedeckt sind, wobei die Abdeckteile (30) durch Schrauben und/oder Schweißen und/oder Kleben befestigt sind.

6. Karosserie nach Anspruch 1 bis 5, **dadurch gekennzeichnet**, daß die Beschnittkanten (14, 15) der Türöffnungen (12) sowie der Ausschnitte für Radhäuser an Fahrzeuginnenseite und Fahrzeugaußenseite unterschiedliche Verläufe aufweisen.

## Claims

1. Body for motor vehicles, in which extruded light metal profiles serve as supporting and body panel-formin g elements, characterised in that a body is formed laterally in the region of the floor sills (2) as far as the waistline (16) by extruded profiles (1) extending in the longitudinal direction of the vehicle, a floor assembly (5) is formed essentially by extruded profiles (4) which extend transversely to the direction of travel and which are connected to the side-forming extruded profiles (1) in the region of the floor sills (2), above the waistline (16) of the body on the side-forming extruded profiles (1) is mounted a roof frame (20) consisting of curved profiles and supported by pillars (17, 18, 19), and in a manner known in the art the door openings (12) are cut out of the side-forming extruded profiles (1), at a front edge (6) and a rear edge (7) is formed a contour for fitting a front module (8) and a rear module (9), and the roof region over the roof frame (20) is covered by shaped portions, wherein the side-forming extruded profiles (1) arranged above the floor sill (2) are divided in their length and provided with specific cross-sections adapted to their length range.

2. Body according to claim 1, characterised in that the floor assembly (5) is provided with cut-outs (10) which are filled by floor-forming portions (11) of the front module (8) and/or of the rear module (9), wherein the floor-forming portions (11) are connected to the floor assembly (5).

3. Body according to claims 1 and 2, characterised in that the connection of the extruded profiles (1; 4) to each other in their longitudinal direction in a manner known in the art is formed by integrally formed joining edges (groove 23; shaped groove 25; dovetail profile 26) which interlock and form a form-locking connection.

4. Body according to claims 1 to 3, characterised in that the connection of extruded profiles (1; 4) extendin g perpendicularly or at obtuse angles to each other in a manner known in the art is formed by tenons formed at the end cut of one extruded profile (4) and by corresponding openings and indentations (22) in the course of the other extruded profile (1), using clamping elements and/or welding methods and/or adhesive methods.

5. Body according to claims 1 to 4, characterised in that end cut edges as well as cut-out edges at door openings (12), wheel housings or the like are covered in a manner known in the art by separate covering portions (30) made of metal or plastic, wherein the covering portions (30) are fixed by bolts and/or welding and/or adhesion.

6. Body according to claims 1 to 5, characterised in that the cut edges (14, 15) of the door openings (12) as well as of the cut-outs for wheel housings on the inside of the vehicle and the outside of the vehicle have different shapes.

## Revendications

1. Carrosserie pour véhicule automobile dans laquelle des profilés extrudés en alliage léger sont utilisés comme éléments porteurs et éléments de parois de carrosserie, caractérisé par le fait qu'un corps de carrosserie est formé latéralement, dans la région des longerons (2) jusqu'à la ceinture (16), de profilés (1) extrudés qui s'étendent dans la direction longitudinale du véhicule, qu'un plancher (5) est formé de profilés (4) extrudés qui s'étendent essentiellement transversalement à la direction de déplacement et sont liés aux profilés (1) extrudés formant les côtés dans la région des longerons (2), qu'un cadre de toit (20) formé de profilés cintrés et supporté par des montants (17, 18, 19) est placé sur les profilés (1) extrudés formant les côtés, au-dessus de la ceinture (16), que les ouvertures de portes (12) sont découpées de manière connue en soi dans les profilés (1) extrudés formant les côtés, qu'une découpe pour recevoir un module d'avant (8) et un module d'arrière (9) est aménagée dans un bord avant (6) et dans un bord arrière (7) et que la zone de toit, sur le cadre de toit (20) est habillée au moyen d'éléments façonnés, les profilés (1) extrudés formant les côtés qui sont disposés au-dessus des longerons (2) étant subdivisés dans le sens de la longueur et dotés de sections transversales spécifiques adaptées à la portion de longueur.

2. Carrosserie selon la revendication 1, caractérisée par le fait que le plancher (5) est pourvu de découpes (10) qui sont comblées par des parties (11) formant fond du module d'avant (8) et/ou du module d'arrière (9), les parties formant fond (11) étant reliées au plancher (5).

3. Carrosserie selon les revendications 1 et 2, caractérisée par le fait que la liaison entre les profilés (1; 4) extrudés, dans le sens de leur longueur, est réalisée de manière connue en soi par des bords d'assemblage intégrés (rainure 23; rainure profilée 25; profil en queue d'aronde 26) qui s'engagent les uns dans les autres et forment une liaison par obstacle.

4. Carrosserie selon les revendications 1 à 3, caractérisée par le fait que la liaison entre des profilés (1; 4) extrudés formant entre eux un angle droit ou un angle obtus est réalisée de manière connue en soi à l'aide de tourillons formés au niveau de la coupe d'extrémité de l'un des profilés (4) et d'ouvertures ou de découpes (22) dans l'autre profilé (1) extrudé en utilisant des éléments de serrage et/ou en appliquant des procédés de soudage et/ou des procédés de collage.

5. Carrosserie selon les revendications 1 à 4, caractérisée par le fait que les bords de coupe aux extrémités et les bords des découpes d'ouvertures de porte (12), de passages de roues et autres sont masqués de manière connues en soi par des éléments de couverture (30) en métal ou en matière plastique, les éléments de couverture (30) étant fixés par des vis et/ou par soudage et/ou par collage.

6. Carrosserie selon les revendications 1 à 5, caractérisée par le fait que les bords de coupe (14, 15) des ouvertures de porte (12) ainsi que des découpes de passages de roues ont des tracés différents côté intérieur et côté extérieur du véhicule.
